(19) Europäisches Patentamt
European Patent Office
Office européen des brevets

(11) Publication number: **0 394 961 A2**

# (12) EUROPEAN PATENT APPLICATION

(21) Application number: **90107767.7**

(22) Date of filing: **24.04.90**

(51) Int. Cl.5: **A01N 37/40, A01N 41/04, A23L 1/217**

(30) Priority: **24.04.89 US 342552**
**16.04.90 US 508177**

(43) Date of publication of application:
**31.10.90 Bulletin 90/44**

(84) Designated Contracting States:
**AT BE CH DE DK ES FR GB GR IT LI LU NL SE**

(71) Applicant: **J.R. SIMPLOT COMPANY**
**999 Main Street**
**Boise, Idaho 83707(US)**

(72) Inventor: **Nickell, Louis G.**
**24 Sierra Drive**
**Hot Springs Village, Arkansas 91909(US)**

(74) Representative: **Dreiss, Hosenthien & Fuhlendorf**
**Gerokstrasse 6**
**D-7000 Stuttgart 1(DE)**

## (54) Treatment of potatoes with a substituted benzoic acid.

(57) Potato products are prepared by a process including the step of providing a substituted benzoic acid growth regulating compound to the potato tubers. Preferred compounds include acetylsalicylic acid, 5-bromosalicylic acid, 5-chlorosalicylic acid, 5-hydroxysalicylic acid, and 2,6-dihydroxybenzoic acid. When provided in an effective dose level, the growth regulating compounds reduce the sugar content of potato tubers and reduce sprouting of stored potato tubers. Fried potato products produced from the treated potato tubers, such as french fries and potato chips, are less subject to discoloration during frying than are products produced from untreated potato tubers.

EP 0 394 961 A2

Xerox Copy Centre

# TREATMENT OF POTATOES WITH A SUBSTITUTED BENZOIC ACID

## BACKGROUND OF THE INVENTION

This invention relates to the growth, metabolism, storage, and preparation of potatoes for potato products, and, more particularly, to a chemical regulating process for modifying potato tubers.

Potatoes are a staple part of the diet of people throughout the world. They are consumed in many forms, and in recent years processed potato products such as french fries and potato chips have grown in popularity. A large proportion of potatoes grown each year are consumed in the form of such processed potato products.

To produce french fries and potato chips, potato tubers are sectioned into appropriately shaped and sized pieces, which normally are relatively thin in at least one dimension, and then fried in oils or other deep frying media. The frying process cooks the thinly sectioned potato pieces, which desirably have a uniform light golden color at the conclusion of the frying process.

It is often found that some of the potato pieces have a dark brown or black color in some areas, or uneven coloration after frying, and in particular may have dark colored regions that appear to the consumer to be burned by the frying process. In fact, the dark color is not due to burning or improper cooking, but instead has been attributed to an uneven distribution, or excessive level, of sugar in the potato. When heated in the cooking process, the excess sugar in the potato reacts with other organic compounds, such as amino acids and ascorbic acid, with resulting dark colored regions of the product where there is excess sugar. Since the sugar is not distributed evenly through the interior of the potato tuber, some regions are more prone than others to have the dark color, so that the resulting processed product has uneven coloration. While the dark color is the most apparent result of the excessive or uneven sugar content, excess sugar can adversely affect the flavor and texture of the final product. Processing economics are also adversely influenced as a result of efforts to remove or leach out the excessive levels of sugar, sort out the defective pieces of final product, or down grade the quality level of less severely affected processed product.

Although a small degree of color variation in the processed potato product may be acceptable, a product having regions of dark color appears to the consumer to be burned, suggesting improper procedures by the vendor of the product. There is therefore a continuing need for an improved approach for preparing processed potato products that do not exhibit the dark color and other adverse effects of the presence of excess sugar. The present invention fulfills this need, and further provides related advantages.

## SUMMARY OF THE INVENTION

The present invention provides a method or process for improving storability of potato tubers and preparing potato products having significantly reduced adverse product influences of excessive sugar content, by restricting the sugar content of the potato tubers themselves. The method is readily applied to the potatoes using conventional equipment, and adds only marginally to the cost of the potato product. Cooked products prepared from potato tubers treated by this method exhibit lighter overall fry color and significantly reduced uneven coloration during cooking, and are less prone to degradation in flavor and texture which can be caused by excessive sugar content.

In accordance with the invention, a method for producing a potato product includes the steps of growing potatoes; and providing a substituted benzoic acid to the potato tubers in an effective amount sufficient to restrict the dextrose sugar content of the potato tubers to below the dextrose sugar content present in tubers prepared without the step of providing a substituted benzoic acid. The process also extends to the preparation of the consumer potato products. In accordance with this aspect of the invention, a method for producing a fried potato product comprises the steps of growing potatoes; providing a substituted benzoic acid to the potato tubers in an effective amount sufficient to improve the fry color of sectioned potato pieces, as compared with those prepared without the step of providing a substituted benzoic acid; harvesting the potatoes; sectioning the harvested potatoes; and frying the sectioned potatoes.

The preferred benzoic acids for use in these and other aspects of the invention are acetylsalicylic acid, 5-bromosalicylic acid, 5-chlorosalicylic acid, 5-hydroxysalicylic acid, and 2,6-dihydroxybenzoic acid, with acetylsalicylic acid and 5-bromosalicylic acid being most preferred. As a group, those substituted benzoic

acids which are salicylic acids having a substitution for the hydrogen at the 5 position are particularly effective.

The application of substituted benzoic acids to potatoes has been found to restrict or diminish the sugar content of the potato tuber at and shortly after harvesting, and also after storage for extended periods. When the harvested, or harvested and stored, potato tubers are then processed into potato products, such as french fries and potato chips, there is less incidence of uneven or dark coloration than found for otherwise similarly processed, but untreated, potatoes. In some cases, the growth regulators also improve the yields and quality of the potato tubers.

The substituted benzoic acids generally act as plant growth regulators, which are compounds that affect the metabolism of the plant. The substituted benzoic acids can be provided to the potatoes by any of several acceptable delivery systems, such as application to the leaves of the growing plants as a foliar spray, to the furrows where the seed potatoes are planted either before planting or at the time of planting, or to the harvested tubers. The presently preferred approach is a foliar spray of an aqueous solution of the growth regulator, sprayed onto the leaves of the growing plants.

The growth regulator must be delivered in an effective amount sufficient to effect the desired change in the potato tubers. For one of the most preferred growth regulators of the invention, 5-bromosalicylic acid, the preferred delivery approach is an aqueous foliar spray that is sprayed at a rate selected to deliver from about 0.2 to about 4 pounds of the 5-bromosalicylic acid per acre of growing plants. For another preferred growth regulator of the invention, acetylsalicylic acid, the preferred delivery approach is an aqueous foliar spray that is sprayed at a rate selected to deliver from about 0.05 to about 2 pounds of the acetylsalicylic acid per acre of growing plants.

Surprisingly, the plant growth regulators of the present invention also reduce post-harvest sprouting of potato tubers. When potato tubers are stored for a period of time, sprouting is often observed. This sprouting is undesirable, as it evidences the hydrolyzing of starch to even more sugar in the tuber, and also is accompanied by moisture and weight loss of the tuber. In accordance with this aspect of the invention, a method for reducing sprouting of potatoes during storage comprises the steps of growing potatoes; and providing a substituted benzoic acid to the potato tubers in an effective amount sufficient to reduce the sprouting of the potatoes during storage as compared with those prepared without the step of providing a substituted benzoic acid.

The approach of the invention provides an important advance in the art of preparation of potato products. Potatoes are grown to have improved characteristics, but need not be processed specially for this purpose except for the application of the substituted benzoic acid. The growth regulator may be delivered using a variety of delivery approaches. The treated potatoes are more uniform in size, weight, and shape than untreated potatoes, leading to a greater certainty of production of uniform products, and thence improving the process economics for the grower and potato processor. Other features and advantages of the invention will be apparent from the following more detailed description of the preferred embodiments, which illustrates, by way of example, the principles of the invention.

## DETAILED DESCRIPTION OF THE PREFERRED EMBODIMENTS

To practice the preferred embodiments, white potatoes are grown under otherwise normal growing conditions, preferably with normal planting and growth conditions. External stress on the plants, such as excessive heat or a lack of watering, is preferably avoided, but the absence of stress is not required for the method to be successful.

In the presently preferred approach, while the plants are in their normal growth process, the growth regulator is provided to the plants. Delivery is accomplished by spraying the foliage of the potato plants with an aqueous solution of the growth regulator, using a conventional agricultural spraying apparatus. The growth regulator is then absorbed through the leaves. The plant growth regulator is sprayed onto the plants in an amount sufficient to reduce the sugar content of the tubers after harvesting, and preferably in an amount of from about 0.05 to about 4.0 pounds per acre of growing plants, although lower or higher amounts are operable. An effective application level sufficient to reduce discoloration during processing or an effective application level sufficient to reduce sprouting during storage can also be selected, depending upon the objective of the procedure, but in most cases these effective levels will be generally coincident.

Other application procedures are also effective. The growth regulator may be applied to the furrow in the ground before or at the time of planting, as by spraying. The growth regulator may be applied to the growing plant by a foliar spray, as described, or by dusting or other approach. Finally, the growth regulator

may be applied to the harvested potato tubers by spraying, dipping, dusting, or other approach.

There is no known limitation on the variety of potato to which the present process is applicable. Normally, such potatoes would generally be of the Irish or white potato types, because generally there is no objection to high sugar levels in sweet potatoes. However, if the objective were to control sprouting during storage, the present approach might be used even for sweet potatoes. Illustrative varieties of potatoes that are beneficially treated with the approach of the present invention include Russet Burbank, Norchip, Shepody, and Kennebec, but the invention is not so limited in its application.

In one preferred approach, the plant growth regulator is 5-bromosalicylic acid, with 2,6-dihydroxybenzoic acid a slightly less favored alternative. 5-bromosalicylic acid is a substituted benzoic acid, with a molecular structure:

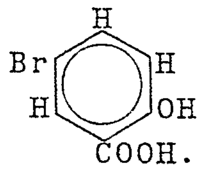

2,6-dihydroxybenzoic acid is also a substituted benzoic acid, with a molecular structure:

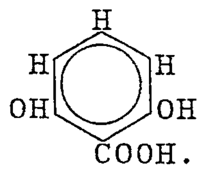

The two preferred plant growth regulators were evaluated to assess their effectiveness in controlling sugar content in potato tubers and in achieving a high quality fried potato product. The growth regulators were sprayed onto growing potato plants using the preferred procedure outlined previously, or harvested tubers were immersed in a dilute aqueous solution of the growth regulator. Potato plants of the Russet Burbank variety were planted using normal cultural practices as follows. Planting was on April 26, 1987 in Canyon County, Idaho, United States. The soil type was a silt loam. Row spacing was 36 inches, and seed potato spacing was 10 inches in the row. Fertilizer providing 200 pounds per acre of nitrogen, 150 pounds per acre phosphorus, 150 pounds per acre potassium, 4 pounds per acre sulfur, and trace amounts of zinc, manganese, iron, and boron was applied to the test plot. Irrigation was by furrow irrigation. Some plots within the field were sprayed with the foliar solution of substituted benzoic acid on July 9-10, 1987 ("early application") and other plots were sprayed on July 31, 1987 ("late application"). In each case, application levels of 0.4 pounds per acre ("low"), 2.0 pounds per acre ("medium"), and 4.0 pounds per acre ("high") were evaluated, for each of the two growth regulators. Untreated "control" plots for each of the application conditions were also maintained. All potatoes were harvested on September 22-24, 1987.

The growing conditions in the 1987 season in the area of the test plots were somewhat stressful. Stress conditions are often encountered during the growing season and the post-harvest storage period. It is these uncontrolled stressful conditions that to some extent cause elevated sugar levels in the potato tuber, resulting in dark fry color. Even under "normal" non-stressful conditions, natural metabolic processes cause a gradual buildup of sugars in potato tubers during long-term storage. Samples of the potato tubers were therefore stored until April 12, 1988 for further evaluation, see Examples 4-6. All samples and potato tubers from the test plots were eventually discarded and not used in any product provided to the public.

Example 1

In one test, the sugar content of the potato tubers was measured shortly after harvesting, and the results are reported in the following Table I. Only the dextrose (glucose) and sucrose sugar levels are reported. It is known that dextrose is the sugar primarily responsible for browning or dark coloration of the potato pieces during processing. The sugar level is reported as a percent of fresh weight. A control check for each of the application levels is provided.

TABLE I

| | Sugar Content | |
|---|---|---|
| Treatment | Dextrose | Sucrose |
| 5-bromosalicylic acid | | |
| Early Application | | |
| Control (low level) | 0.430 | 1.210 |
| Low level | 0.565 | 1.095 |
| Control (medium level) | 0.490 | 1.280 |
| Medium level | 0.275 | 1.100 |
| Control (high level) | 0.510 | 1.070 |
| High level | 0.250 | 0.760 |
| Late Application | | |
| Control (low level) | 0.210 | 0.490 |
| Low level | 0.180 | 0.700 |
| Control (medium level) | 0.330 | 1.070 |
| Medium level | 0.220 | 0.890 |
| Control (high level) | 0.280 | 1.150 |
| High level | 0.255 | 0.965 |
| 2,6-dihydroxybenzoic acid | | |
| Early Application | | |
| Control (low level) | 0.430 | 1.210 |
| Low level | 0.400 | 1.200 |
| Control (medium level) | 0.490 | 1.280 |
| Medium level | 0.420 | 0.720 |
| Control (high level) | 0.510 | 1.070 |
| High level | 0.475 | 0.960 |
| Late Application | | |
| Control (low level) | 0.330 | 1.050 |
| Low level | 0.235 | 0.705 |
| Control (medium level) | 0.460 | 1.120 |
| Medium level | 0.285 | 1.190 |
| Control (high level) | 0.410 | 1.120 |
| High level | 0.230 | 0.800 |

Both plant growth regulators generally lowered the sugar content of the harvested potato tubers at all levels tested, although experimental variations cause some anomalies in the results. The 5-bromosalicylic acid had the stronger and more consistent effect of the two growth regulators.

## Example 2

Samples of freshly harvested potato tubers grown and treated in the manner indicated for Example 1 were tested for appearance according to the United States Department of Agriculture Color Standard for Frozen French Fried Potatoes, Third Edition, 1972. According to this procedure, potato tubers are sectioned and fried in a standard manner, and their color and appearance were compared to a color and appearance chart provided in the Standard. In the following Table II, the results are reported according to the percentage of the samples from each treatment tested in each condition that fell into particular categories of color and appearance. The most uniform and pleasing appearance is represented by the F0 color scale, while increasing F values of F1 and F2 indicate increasing degrees of dark color and discoloration that may

be unacceptable to a consumer. The figures in each row total to approximately 100 percent, but may vary slightly from that figure due to rounding of numbers.

TABLE II

| | Fry Color Scale | | |
|---|---|---|---|
| Treatment | F0 | F1 | F2 |
| 5-bromosalicylic acid | | | |
| Early Application | | | |
| Control (low level) | 77 | 18 | 3 |
| Low level | 73 | 27 | 0 |
| Control (medium level) | 67 | 29 | 17 |
| Medium level | 80 | 20 | 0 |
| Control (high level) | 65 | 17 | 3 |
| High level | 90 | 10 | 0 |
| Late Application | | | |
| Control (low level) | 80 | 17 | 5 |
| Low level | 95 | 0 | 5 |
| Control (medium level) | 50 | 33 | 3 |
| Medium level | 98 | 0 | 3 |
| Control (high level) | 77 | 20 | 13 |
| High level | 90 | 10 | 13 |
| 2,6-dihydroxybenzoic acid | | | |
| Early Application | | | |
| Control (low level) | 77 | 18 | 5 |
| Low level | 63 | 33 | 5 |
| Control (medium level) | 67 | 29 | 3 |
| Medium level | 68 | 30 | 3 |
| Control (high level) | 65 | 17 | 13 |
| High level | 70 | 15 | 13 |
| Late Application | | | |
| Control (low level) | 80 | 20 | 0 |
| Low level | 88 | 13 | 0 |
| Control (medium level) | 50 | 35 | 15 |
| Medium level | 85 | 13 | 3 |
| Control (high level) | 70 | 30 | 0 |
| High level | 98 | 3 | 0 |

Both plant growth regulators in most cases increase the percentage of the potato products achieving the highest rating (F0), and reduce the amount of off-color products. In both Example 1 and Example 2, the lower treatment levels sometimes produce the best results, suggesting the possibility of an optimum low level addition. Such a low level addition would be desirable both economically and from an environmental standpoint.

Four other substituted benzoic acids were tested during the 1987 growth year trials for their effects on sugar content of the potatoes. All of the substituted benzoic acids tested yielded lower sugar contents of the potatoes under at least some of the application conditions, but the preferred compounds yielded the most consistent results under a variety of conditions. These results suggest that the substituted benzoic acids have these effects on potatoes, but in varying degrees and under different conditions of application.

The other substituted benzoic acids tested, and their molecular structures, are:

2,6-dichlorobenzoic acid, having a structure:

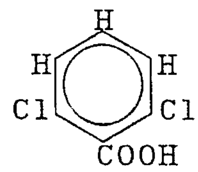

3,4-dichlorobenzoic acid, having a structure:

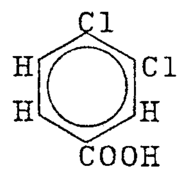

4,5-dichlorophthalic acid, having a structure:

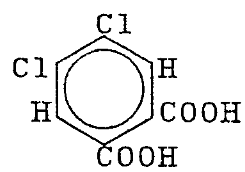

and 2,6-dimethoxybenzoic acid, having a structure:

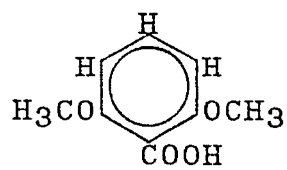

In the following examples, the growth, application, and processing conditions are as reported for Examples 1 and 2. Terminology is also the same, and has the same meaning.

Example 3

The following Table III reports the effects on sugar levels at harvest in relation to the sugar content for control potatoes which were grown under identical conditions but not treated. A plus (+) sign indicates that the sugar content was better (lower) than the control, a minus (-) sign indicates that the sugar content was worse (higher) than the control, and a zero (0) indicates that the sugar content was the same as the control. The results for 5-bromosalicylic acid and 2,6 dihydroxybenzoic acid are effectively repeated from Table I, for comparison.

TABLE III

| | Dextrose | | Sucrose | |
|---|---|---|---|---|
| Compound, Application | Early | Late | Early | Late |
| 5-bromosalicylic acid | | | | |
| Low level | - | + | + | + |
| Medium level | + | + | + | + |
| High level | + | + | + | + |
| 2,6-dichlorobenzoic acid | | | | |
| Low level | - | - | + | - |
| Medium level | + | + | + | + |
| High level | - | - | - | - |
| 3,4-dichlorobenzoic acid | | | | |
| Low level | - | - | - | + |
| Medium level | + | + | - | + |
| High level | + | - | + | - |
| 4,5-dichlorophthalic acid | | | | |
| Low level | - | - | + | + |
| Medium level | - | 0 | - | - |
| High level | - | - | + | + |
| 2,6-dimethoxybenzoic acid | | | | |
| Low level | + | - | - | - |
| Medium level | + | + | - | + |
| High level | + | + | - | + |
| 2,6-dihydroxybenzoic acid | | | | |
| Low level | + | + | - | + |
| Medium level | + | + | - | - |
| High level | + | + | + | + |

Example 4

During the storage of potato tubers, some of the starch is converted to sugar, with the result that processed potato products prepared from stored potato tubers may have a higher incidence of dark coloration than products prepared from freshly harvested potato tubers. Storage tests were conducted in which potato tubers harvested at the same time as those of Examples 1-3 were stored until April 12, 1988. These stored potato tubers otherwise had the same treatments as reported in Examples 1-3.

In this Example 4, the sugar contents of the harvested and stored tubers are reported. The sugar contents produced by low, medium, and high level applications, for each of two repetitions of the test analysis, of the growth regulators are averaged, and reported in Table IV. In every case, each of the growth regulators resulted in reduced amounts of at least one of the sugars.

TABLE IV

| Application, Compound | Dextrose | Sucrose |
|---|---|---|
| Early Application | | |
| 5-bromosalicylic acid | 0.70 | 0.79 |
| 2,6-dichlorobenzoic acid | 0.74 | 0.82 |
| 3,4-dichlorobenzoic acid | 0.74 | 0.70 |
| 4,5-dichlorophthalic acid | 0.91 | 0.66 |
| 2,6-dimethoxybenzoic acid | 0.82 | 0.73 |
| 2,6-dihydroxybenzoic acid | 0.86 | 0.77 |
| Control (no treatment) | 0.79 | 0.77 |
| Late Application | | |
| 5-bromosalicylic acid | 0.49 | 0.80 |
| 2,6-dichlorobenzoic acid | 0.66 | 0.76 |
| 3,4-dichlorobenzoic acid | 0.58 | 0.74 |
| 4,5-dichlorophthalic acid | 0.74 | 0.72 |
| 2,6-dimethoxybenzoic acid | 0.72 | 0.84 |
| 2,6-dihydroxybenzoic acid | 0.63 | 0.74 |
| Control (no treatment) | 0.74 | 0.85 |

The results for early application of the growth regulators are mixed, but for late application every one of the chemicals produced sugar levels no higher than those of the control, and in most cases significantly lower. Thus, a late application of the growth regulators is preferred.

Example 5

Samples of the potato tubers stored in the manner discussed under Example 4 were cut into strips, fried, and graded according to the Department of Agriculture Standard discussed under Example 2, and in addition the percentages of french fries having darkened ends were recorded. In the following Table 5, the percentages of the potato pieces having color ratings of the F2 color ("F2"), greater than the F2 color (">F2"), and having dark colored ends (DE) are reported, with the results in each category averaged over low, medium, and high applications of the growth regulator chemical, and over two repetitions of the tests. The data are reported in this fashion because color ratings below F2 are judged acceptable, F2 color rating is marginal, and a color rating greater than the F2 group is generally unacceptable. In Table V, the F2 and >F2 percentages are reported, and the remainder of the fried pieces fell in the group having ratings below F2. Since dark colored ends are the most noticeable manifestation of the sugar reaction in processing, it is preferred that this percentage be as low as possible.

TABLE V

| Application, Compound | F2 | >F2 | DE |
|---|---|---|---|
| Early Application | | | |
| 5-bromosalicylic acid | 31.7 | 5.8 | 17.5 |
| 2,6-dichlorobenzoic acid | 25.8 | 10.0 | 19.2 |
| 3,4-dichlorobenzoic acid | 25.0 | 5.0 | 23.3 |
| 4,5-dichlorophthalic acid | 29.2 | 10.0 | 27.5 |
| 2,6-dimethoxybenzoic acid | 16.7 | 5.8 | 21.7 |
| 2,6-dihydroxybenzoic acid | 10.8 | 10.8 | 13.3 |
| Control (no treatment) | 20.0 | 14.2 | 21.7 |
| Late Application | | | |
| 5-bromosalicylic acid | 10.0 | 0.0 | 13.3 |
| 2,6-dichlorobenzoic acid | 14.2 | 2.5 | 19.2 |
| 3,4-dichlorobenzoic acid | 12.5 | 2.5 | 21.7 |
| 4,5-dichlorophthalic acid | 17.5 | 5.8 | 15.8 |
| 2,6-dimethoxybenzoic acid | 23.0 | 12.0 | 20.0 |
| 2,6-dihydroxybenzoic acid | 25.0 | 9.2 | 16.7 |
| Control (no treatment) | 15.8 | 13.3 | 21.0 |

The percentage of pieces having color ratings greater than F2 decreased for each of the growth regulators, for both early and late application. The percentage of dark colored ends for the preferred growth regulators is improved over the control in each case, and the results for the other plant growth regulators are mixed. However, for all the plant growth regulators applied late, all of the >F2 results are improved over the control, and all but one have improved dark colored end results. These results again indicate a late application to be preferred.

Example 6

Another problem experienced with stored potato tubers is the development of sprouts on the potato tubers. It is preferred that sprouting be avoided. As a semiquantitative assessment of sprouting, potato tubers stored in the manner described in Example 4 were graded for sprouting at the end of storage. The sprouting grading scale was:

0 No sprouts
1 Barely peeping
2 Strongly peeping
3 1/8-1/4 inch sprouts
4 greater than 1/4 inch sprouts "Peeping" is a term of art indicating the initial appearance of the bud end of the sprout from an eye of the potato.

The following Table VI reports the sprouting grading value, averaged over low, medium, and high levels of application, and also averaged over two repetitions. The results demonstrate that sprouting of the potatoes during storage can be inhibited using the growth regulators of the invention, and that late application is preferred to early application to achieve the most effective results.

TABLE VI

| Compound | Early | Late |
|---|---|---|
| 5-bromosalicylic acid | 3.0 | 1.1 |
| 2,6-dichlorobenzoic acid | 1.8 | 0.6 |
| 3,4-dichlorobenzoic acid | 2.8 | 1.2 |
| 4,5-dichlorophthalic acid | 2.2 | 1.0 |
| 2,6-dimethoxybenzoic acid | 2.1 | 2.6 |
| 2,6-dihydroxybenzoic acid | 2.5 | 1.7 |
| Control (no treatment) | 2.4 | 1.9 |

Example 7

Plant growth regulators according to the present invention were applied to potato tubers immediately after harvesting, by dipping the tubers into an aqueous solution of 50 parts per million of the regulator chemical. These tubers had not been sprayed or otherwise previously treated by the approach of the invention. The potato tubers were then stored and analyzed on April 12, 1988. The following Table VII indicates the analyzed sugar level in percent. Table VIII presents the results of fry tests performed at that time as a percentage of tests resulting in pieces in a category, conducted according to the method described in Example 2.

TABLE VII

| Compound | Dextrose | Sucrose |
|---|---|---|
| 5-bromosalicylic acid | 0.22 | 1.03 |
| 2,6-dichlorobenzoic acid | 0.47 | 1.20 |
| 3,4-dichlorobenzoic acid | 0.67 | 1.23 |
| 4,5-dichlorophthalic acid | 0.50 | 1.52 |
| 2,6-dimethoxybenzoic acid | 0.30 | 1.13 |
| 2,6-dihydroxybenzoic acid | 0.26 | 1.13 |
| Control (no treatment) | 0.65 | 1.11 |

TABLE VIII

| Compound | F0 | F1 | F2 |
|---|---|---|---|
| 5-bromosalicylic acid | 67 | 33 | 0 |
| 2,6-dichlorobenzoic acid | 22 | 44 | 33 |
| 3,4-dichlorobenzoic acid | 22 | 56 | 22 |
| 4,5-dichlorophthalic acid | 40 | 60 | 0 |
| 2,6-dimethoxybenzoic acid | 56 | 33 | 11 |
| 2,6-dihydroxybenzoic acid | 63 | 38 | 0 |
| Control (no treatment) | 56 | 33 | 11 |

Example 8

Example 7 was repeated in two separate programs, except that dip solution concentrations of the plant

growth regulators of 500 and 1000 parts per million were utilized. The plant growth regulators in these concentrations did not improve the sugar content or fry color of the potatoes.

Further testing was conducted during the 1988 growing season. For the 1988 tests, potato plants of the Russet Burbank variety were planted using normal cultural practices. Planting was on April 20, 1988 in Canyon County, Idaho. The soil type was a silt loam. The row spacing was 36 inches, and the seed potato spacing in the row was 11 inches. Fertilizer was applied providing 225 pounds per acre of nitrogen, 125 pounds per acre of phosphorus, 100 pounds per acre of potassium, 70 pounds per acre of sulfur, and trace amounts of zinc, manganese, magnesium, and iron. Eptam-Treflan herbicide and Thimet insecticide were applied according to manufacturer instructions. Irrigation was by furrow irrigation. Some plots within the field were sprayed with a foliar solution of the plant growth regulator on June 23, 1988 ("early application") and other plots were sprayed on August 4, 1988 ("late application"). Application levels of 0.2 pounds per acre ("low") and 1.0 pounds per acre ("medium") were used in various plots. Untreated "control" plots for each of the application conditions were also maintained. All potatoes were harvested on September 14-15, 1988.

The 1988 season was a highly stressful growing season, with severe drought experienced throughout much of the United States, as well as in the region of the test plots. Even though the potato plots whose product is discussed herein were irrigated, there was ongoing heat and moisture stress experienced by the plants. Normally, such severe stress results in major sugar and fry color problems in the harvested tubers.

In addition to the substituted benzoic acids described previously, some additional substituted benzoic acids and control agents were utilized in the 1988 tests. These included:

5-chlorosalicylic acid, having a structure:

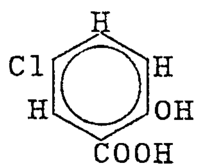

5-sulfosalicylic acid, having a structure:

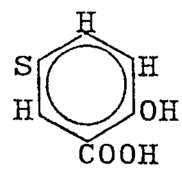

5-hydroxysalicylic acid, having a structure:

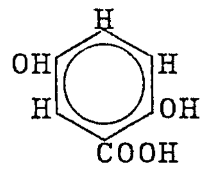

salicylic acid, having a structure:

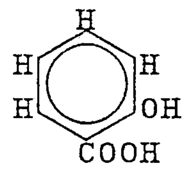

benzoic acid,'having a structure:

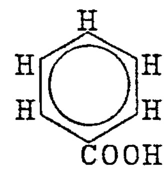

4-hydroxysalicylic acid, having a structure:

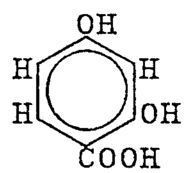

3,4-dihydroxybenzoic acid, having a structure:

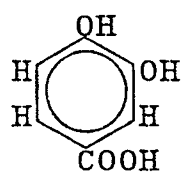

and 2,6-dichlorobenzoic acid, having a structure:

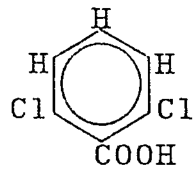

Example 9

Samples of the 1988 growth of potato tubers were fry tested using the procedures discussed in relation to Example 2. The results of the testing are reported in the following Table IX, wherein the reporting categories are the same as in Table II and Table V:

TABLE IX

| Application, Compound | F0 | >F2 | DE |
|---|---|---|---|
| 5-bromosalicylic acid | | | |
| Early Application | | | |
| Control | 3 | 27 | 60 |
| Low level | 0 | 53 | 57 |
| Medium level | 10 | 40 | 63 |
| Late Application | | | |
| Control | 0 | 25 | 55 |
| Low level | 17 | 15 | 65 |
| Medium level | 13 | 23 | 57 |
| 5-chlorosalicylic acid | | | |
| Early Application | | | |
| Control | 3 | 47 | 63 |
| Low level | 40 | 15 | 50 |
| Medium level | 17 | 25 | 30 |
| Late Application | | | |
| Control | 10 | 15 | 60 |
| Low level | 40 | 5 | 40 |
| Medium level | 33 | 17 | 50 |
| 5-hydroxysalicylic acid | | | |
| Early Application | | | |
| Control | 3 | 47 | 67 |
| Low level | 10 | 37 | 53 |
| Medium level | 7 | 30 | 60 |
| Late Application | | | |
| Control | 3 | 37 | 65 |
| Low level | 17 | 20 | 55 |
| Medium level | 5 | 60 | 57 |

Generally, the best results are obtained with low levels of the plant growth regulator, but in all cases the regulators have a beneficial effect in some procedure.

Example 10

Samples of the potatoes grown in 1988 were tested for sugar content. The results are reported in the following Table X, wherein the sugar content is in percent.

TABLE X

| Application, Compound | Dextrose | Sucrose |
|---|---|---|
| 5-bromosalicylic acid | | |
| Early Application | | |
| Control | 1.27 | 1.33 |
| Low level | 1.97 | 1.14 |
| Medium level | 1.47 | 1.09 |
| Late Application | | |
| Control | 1.59 | 1.22 |
| Low level | 1.30 | 1.03 |
| Medium level | 1.80 | 1.29 |

TABLE X (Continued)

| Application, Compound | Dextrose | Sucrose |
|---|---|---|
| 5-chlorosalicylic acid | | |
| Early Application | | |
| Control | 1.49 | 0.85 |
| Low level | 1.15 | 1.09 |
| Medium level | 1.18 | 1.06 |
| Late Application | | |
| Control | 1.60 | 1.21 |
| Low level | 0.90 | 0.79 |
| Medium level | 0.95 | 1.14 |
| 5-sulfosalicylic acid | | |
| Early Application | | |
| Control | 2.05 | 1.74 |
| Low level | 1.55 | 1.93 |
| Medium level | 1.87 | 1.15 |
| Late Application | | |
| Control | 1.57 | 0.89 |
| Low level | 1.61 | 0.87 |
| Medium level | 1.63 | 1.08 |
| 5-hydroxysalicylic acid | | |
| Early Application | | |
| Control | 1.56 | 1.49 |
| Low level | 2.14 | 1.28 |
| Medium level | 1.70 | 1.39 |
| Late Application | | |
| Control | 2.09 | 0.86 |
| Low level | 1.62 | 1.25 |
| Medium level | 2.06 | 1.23 |
| salicylic acid | | |
| Early Application | | |
| Control | 1.67 | 1.11 |
| Low level | 1.81 | 0.99 |
| Medium level | 1.59 | 0.68 |

TABLE X (Continued)

| Application, Compound | Dextrose | Sucrose |
|---|---|---|
| Late Application | | |
| Control | 1.34 | 0.88 |
| Low level | 1.15 | 1.04 |
| Medium level | 0.93 | 1.15 |
| benzoic acid | | |
| Early Application | | |
| Control | 1.81 | 1.06 |
| Low level | 1.91 | 1.21 |
| Medium level | 1.59 | 1.09 |
| Late Application | | |
| Control | 1.33 | 1.04 |
| Low level | 1.32 | 1.08 |
| Medium level | 1.57 | 1.15 |
| 4-hydroxysalicylic acid | | |
| Early Application | | |
| Control | 1.38 | 1.02 |
| Low level | 1.38 | 1.14 |
| Medium level | 1.61 | 0.90 |
| Late Application | | |
| Control | 1.28 | 0.63 |
| Low level | 1.71 | 1.17 |
| Medium level | 1.57 | 0.97 |
| 3,4-dihydroxybenzoic acid | | |
| Early Application | | |
| Control | 1.81 | 1.21 |
| Low level | 1.72 | 1.59 |
| Medium level | 2.35 | 0.56 |
| Late Application | | |
| Control | 1.57 | 1.03 |
| Low level | 1.93 | 1.25 |
| Medium level | 1.87 | 1.03 |

TABLE X (Continued)

| Application, Compound | Dextrose | Sucrose |
|---|---|---|
| 2,6-dichlorobenzoic acid | | |
| Early Application | | |
| Control | 2.47 | 1.68 |
| Low level | 2.70 | 1.64 |
| Medium level | 2.30 | 1.28 |
| Late Application | | |
| Control | 1.87 | 1.29 |
| Low level | 1.37 | 1.37 |
| Medium level | 2.30 | 2.07 |

Although it is difficult to draw general conclusions from the tests conducted in 1988 due to the highly stressful growing conditions, the results support the operability of the growth regulators in reducing sugar content and discoloration after frying. The preferred growth regulators identified in the 1987 trials remain preferred. More support is found for the conclusion that salicylic acids having a substitution in the 5 position are the most effective growth regulators.

An additional substituted benzoic acid was tested during the 1989 growth season.

Acetylsalicylic is a substituted benzoic acid also known as 2-acetoxybenzoic acid, but more widely known by the popular name aspirin. Its chemical structure is:

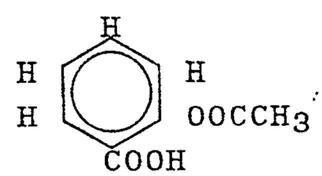

To test the efficacy of acetylsalicylic acid as a growth regulator for potatoes, three test plots of Russet Burbank potatoes were grown during 1989. Each plot was 6 feet by 30 feet in size with row width 36 inches. The plots had been fallow the prior season. The soil was a sandy loam, and the plots were all located at Parma, Canyon County, Idaho, United States. The plots were planted on May 9, 1989, and fertilized at planting with a fertilizer of 100 pounds per acre nitrogen and 200 pounds per acre phosphate. On August 3, 1989, the growing potatoes were given an aqueous foliar spray of about 0.2 pounds per acre of acetylsalicylic acid dissolved in water. The potatoes were harvested October 21, 1989.

A crop of control potatoes was grown on three adjacent plots that were identically treated, except that no acetylsalicylic acid was applied.

The control potatoes had an average yield of 134.3 pounds per plot, and the potatoes treated with acetylsalicylic acid had an average yield of 157.3 pounds per plot.

The harvested potatoes were graded according to conventional standards. The control potatoes had 53.5 percent of Grade 1, with 22.2 percent from 4-6 ounces, 22.3 percent from 6-10 ounces, and 9.0 percent above 10 ounces in size. The potatoes treated with acetylsalicylic acid had 67.2 percent of Grade 1, with 21.6 percent from 4-6 ounces, 28.0 from 6-10 ounces, and 17.6 percent greater than 10 ounces in size. The acetylsalicylic acid treatment therefore produced more high quality potatoes, of large size, as compared with the untreated control.

During the grading the percentage of unmarketable culls was determined. The untreated control plots produced 27.8 percent unmarketable culls, while the plots treated with acetylsalicylic acid produced only 20.1 percent unmarketable culls.

Potatoes were sectioned and evaluated for undesirable quality as determined from the translucency of the ends of the potatoes. The control plots produced 48.0 percent potatoes with such undesirable character, while the plots treated with acetylsalicylic acid produced only 42.0 percent of the potatoes with translucent

ends.

Sectioned pieces were measured for their sugar content. The average dextrose sugar content of the control potatoes was 2.63 percent and only 2.31 percent for the potatoes treated with acetylsalicylic acid. The average sucrose content of the control potatoes was 2.64 percent and only 2.14 percent for the potatoes treated with acetylsalicylic acid.

Samples of freshly harvested potato tubers were tested for appearance according to the United States Department of Agriculture Color Standard for Frozen French Fried Potatoes, discussed previously. The most uniform and pleasing appearance is represented by the F0 color scale, while increasing F values of F1 and F2 indicate increasing degrees of dark color. F values of F0, F1, and F2 are usually acceptable for many fried potato products, while F values greater than F2 are usually unacceptable.

The control potatoes exhibited 70.9 percent with fry color from F0-F2, and 29.0 percent with fry color of F3-F4. The potatoes treated with acetylsalicylic acid exhibited 74.8 percent with fry color from F0-F2, and 25.2 percent with fry color of F3-F4.

Thus, in every area of evaluation, the potatoes produced on the plots treated with acetylsalicylic acid achieved results superior to those of potatoes from the control plots. Yields, tuber size, percent unmarketable product, quality, sugar content, and fry color are all improved by the treatment.

The plant growth regulator approach of the invention provides an important advance in the art of processed potato products, by restricting and diminishing the sugar content of potato tubers and improving the fry color of processed potato products, an important consideration for consumers, food service and institutional buyers, and potato processors. Although particular embodiments of the invention have been described in detail for purposes of illustration, various modifications may be made without departing from the spirit and scope of the invention. Accordingly, the invention is not to be limited except as by the appended claims.

## Claims

1. A method for producing a potato product, including the steps of:
growing potatoes; and
providing a substituted benzoic acid to the potato tubers in an effective amount sufficient to restrict the dextrose sugar content of the potato tubers to below the dextrose sugar content present in tubers prepared without the step of providing a substituted benzoic acid.

2. A method for producing a fried potato product, comprising the steps of:
growing potatoes;
providing a substituted benzoic acid to the potato tubers in an effective amount sufficient to improve the fry color of sectioned potato pieces, as compared with those prepared without the step of providing a substituted benzoic acid;
harvesting the potatoes;
sectioning the harvested potatoes; and
frying the sectioned potatoes.

3. A method for reducing sprouting of potatoes during storage, comprising the steps of:
growing potatoes; and
providing a substituted benzoic acid to the potato tubers in an effective amount sufficient to reduce the sprouting of the potatoes during storage as compared with those prepared without the step of providing a substituted benzoic acid.

4. The method of claim 1, 2, or 3, wherein the substituted benzoic acid is a salicylic acid substituted at the 5 position.

5. The method of claim 1, 2, or 3, wherein the substituted benzoic acid is selected from the group consisting of acetylsalicylic acid, 5-bromosalicylic acid, 5-chlorosalicylic acid, 5-hydroxysalicylic acid, and 2,6-dihydroxybenzoic acid.

6. The method of claim 1, 2, or 3, wherein the substituted benzoic acid is acetylsalicylic acid.

7. The method of claim 1, 2, or 3, including the additional step, after the step of providing, of:
storing the potatoes.

8. The method of claim 1, 2, or 3, wherein the step of providing includes the step of:
spraying a solution containing the substituted benzoic acid onto the foliage of the growing potato plant.

9. The method of claim 1, 2, or 3, wherein the step of providing includes the step of:
applying a solution containing the substituted benzoic acid onto potato tubers after harvest.

10. The method of claim 2, wherein the potato product is a potato chip.

11. The method of claim 2, wherein the potato product is a french fry.